Europäisches Patentamt

European Patent Office

Office européen des brevets

(11) Numéro de publication : **0 031 273**
**B1**

(12) **FASCICULE DE BREVET EUROPÉEN**

(45) Date de publication du fascicule du brevet :
24.08.83

(21) Numéro de dépôt : **80401757.2**

(22) Date de dépôt : **09.12.80**

(51) Int. Cl.³ : **F 41 D 5/04**, F 41 D 11/00,
F 16 F 1/12

(54) **Dispositif de récupération élastique bistable.**

(30) Priorité : **19.12.79 FR 7931036**

(43) Date de publication de la demande :
**01.07.81 Bulletin 81/26**

(45) Mention de la délivrance du brevet :
**24.08.83 Bulletin 83/34**

(84) Etats contractants désignés :
**CH DE GB LI**

(56) Documents cités :
**CH A 72 506**
**CH A 130 925**
**FR A 883 448**
**FR A 1 336 332**
**GB A 128 354**
**US A 2 101 862**
**US A 2 286 133**
**US A 3 538 811**
**US A 3 780 759**

(73) Titulaire : **ETAT-FRANÇAIS représenté par le DELE-
GUE GENERAL POUR L'ARMEMENT**
**Bureau des Brevets et Inventions de la Délégation
Générale pour l'Armement 14, rue Saint-Dominique
F-75997 Paris Armées (FR)**

(72) Inventeur : **Marcon, Joël**
**14, Allée Cavalière**
**F-18000 Bourges (FR)**
Inventeur : **Simon, Georges**
**30, rue Jean Mermoz**
**F-18390 Saint-Germain du Puy (FR)**
Inventeur : **Ferrand, Guy**
**21, rue Garibaldi**
**F-18000 Bourges (FR)**
Inventeur : **Pochard, Patrick**
**17, Boulevard Foch**
**F-18000 Bourges (FR)**

Jouve, 18, rue St-Denis, 75001 Paris, France

## Dispositif de récupération élastique bistable

La présente invention a trait à un dispositif de récupération élastique bistable, c'est-à-dire à un dispositif de récupération élastique oscillant entre deux positions stables éloignées l'une de l'autre et qui, pendant son trajet de l'une à l'autre position, emmagasine tout d'abord une énergie cinétique, puis la restitue tout en se déplaçant dans le même sens, contrairement aux dispositifs de récupération monostables dans lesquels le dispositif emmagasine l'énergie dans un sens et la restitue en sens opposé.

De tels dispositifs peuvent être appliqués dans différentes sortes d'industries et notamment dans l'industrie de l'armement pour des armes automatiques dans lesquelles un tiroir coulissant, entraîné par l'action des gaz de cartouches, reçoit la poussée de ces gaz alternativement en deux sens opposés.

Il existe actuellement des dispositifs permettant d'assurer un positionnement bistable d'une pièce mobile soumise à une série d'impulsions alternatives.

Ces dispositifs comportent généralement deux organes télescopiques élastiques, c'est-à-dire susceptibles d'être comprimés lorsqu'ils diminuent de longueur pour emmagasiner l'énergie et de se détendre lorsque au contraire ils augmentent de longueur pour restituer l'énergie, ces dispositifs télescopiques étant articulés d'une part sur la pièce animée d'un mouvement alternatif axial et, en leurs extrémités opposées, en un point fixe éloigné du trajet de la pièce alternative, le passage au point mort instable s'effectuant lorsque la direction des dispositifs télescopiques est perpendiculaire à la direction du trajet de la pièce alternative, c'est-à-dire lorsque la longueur des dispositifs télescopiques est minimale.

Ces dispositifs présentent tout d'abord l'inconvénient de posséder un encombrement transversal extrêmement important puisque les points d'articulation fixes des dispositifs télescopiques sont transversalement très éloignés de l'axe de la pièce coulissante. En outre, les dispositifs télescopiques étant toujours inclinés, et même à un moment perpendiculaires à l'axe de déplacement de la pièce alternativement mobile, les efforts utilisables sont faibles vis-à-vis des efforts développés par les ressorts des dispositifs télescopiques.

La présente invention a donc pour objectif de remédier à ces inconvénients et de fournir un dispositif de récupération élastique bistable qui soit d'un encombrement transversal extrêmement réduit et qui permette en plus aux moyens élastiques de travailler en direction axiale, c'est-à-dire dans la direction de travail optimale.

L'invention a pour objet un dispositif de récupération élastique bistable comprenant une pièce animée d'un mouvement alterné en deux sens opposés, et des moyens élastiques susceptibles d'emmagasiner une énergie cinétique communiquée à la pièce pendant une première partie du parcours dans un sens et de restituer cette énergie à la pièce pendant la deuxième partie du parcours dans ce sens, caractérisé par le fait qu'il comporte, montés de façon coulissante entre la pièce mobile et une pièce fixe telle qu'un bâti, deux éléments dont le rapprochement mutuel entraîne l'emmagasinage de l'énergie et l'éloignement mutuel entraîne la restitution de l'énergie, des moyens étant prévus pour maintenir, pendant la première partie du parcours dans un sens, le premier des éléments solidaire de la pièce mobile et le deuxième élément solidaire de la pièce fixe et pour maintenir au contraire, pendant une deuxième partie du parcours dans le même sens, le premier élément solidaire de la pièce fixe et le deuxième élément solidaire de la pièce mobile.

La pièce mobile présente de préférence la forme d'une tige axiale susceptible de se déplacer à l'intérieur d'un bâti concentrique, avec un espace intermédiaire dans lequel sont montés lesdits éléments. Toutefois, en variante, on peut prévoir une tige centrale fixe et une pièce mobile périphérique avec, toujours, cet intervalle intermédiaire permettant le logement desdits éléments.

Les moyens permettant de solidariser les éléments avec les pièces mobile et fixe et de les en désolidariser sont avantageusement réalisés sous forme de verrous susceptibles de se déplacer transversalement par rapport à la direction du mouvement, à l'intérieur de chaque élément, la pièce mobile présentant deux gorges ou décrochements espacés l'un de l'autre et la pièce fixe également deux gorges ou décrochements espacés l'un de l'autre de la même distance, la dimension transversale de chaque verrou étant supérieure à l'écart existant entre la pièce mobile et la pièce fixe, lesdits éléments étant disposés de façon telle que, lorsque les verrous de l'un des éléments sont disposés dans une gorge ou décrochement de la pièce fixe, les verrous de l'autre élément sont localisés dans une gorge ou décrochement de la pièce mobile, des moyens étant prévus pour simultanément déplacer les verrous entre les gorges ou décrochements des pièces fixe et mobile, lorsque les gorges ou décrochements desdites pièces se trouvent en concordance.

De façon particulièrement préférée, les moyens permettant d'assurer le mouvement transversal des verrous comprennent des bords inclinés formant rampes pour les gorges ou décrochements, coopérant avec des bords inclinés de façon correspondante des verrous, la distance entre les deux éléments étant réglée de façon telle que, lorsque les gorges ou décrochements des pièces fixe et mobile arrivent en concordance, l'élément entraîné avec la pièce mobile vient heurter l'élément solidaire de la pièce fixe, en communiquant aux deux éléments un choc qui entraîne, pour l'élément qui se déplace et ses verrous, un ralentissement temporaire par rapport à la pièce mobile, et donc complémentairement à l'action du moyen élastique une action de rampe de la pièce mobile contre les verrous de l'élément, en provoquant leur déplacement radial, et simultanément une accélération de l'autre élément, provoquant complémentairement à l'action du moyen élastique par un effet de rampes entre ces verrous et la pièce fixe, le mouvement desdits verrous vers la gorge ou décrochement de la pièce mobile. Dans ce but, on prévoit avantageusement de donner aux gorges une dimension axiale légèrement supérieure à celle des verrous.

On pourrait cependant également utiliser d'autres moyens pour assurer le mouvement radial des verrous, de la gorge ou décrochement d'une des pièces vers la gorge ou décrochement correspondant de l'autre pièce.

De préférence, les moyens élastiques du dispositif récupérateur sont formés par un simple ressort récupérateur de forme hélicoïdale interposé entre la pièce mobile et la pièce fixe et dont les deux extrémités appuient respectivement sur les deux éléments intermédiaires. Cependant, en variante, les éléments intermédiaires peuvent former des pistons enserrant entre eux un fluide élastique, soit directement, soit par l'intermédiaire d'une transmission hydraulique.

D'autres caractéristiques et avantages de l'invention apparaîtront à la lecture de la description suivante, faite à titre d'exemple non limitatif et se référant au dessin annexé dans lequel :

La figure 1 représente schématiquement, en coupe axiale, un dispositif récupérateur selon l'invention.

La figure 2 représente une vue en coupe transversale II-II de la figure 1.

La figure 3 représente une vue en coupe transversale III-III de la figure 1.

Les figures 4 et 5 représentent, schématiquement, deux positions d'un tel dispositif.

La figure 6 représente, schématiquement, un autre montage d'un tel dispositif.

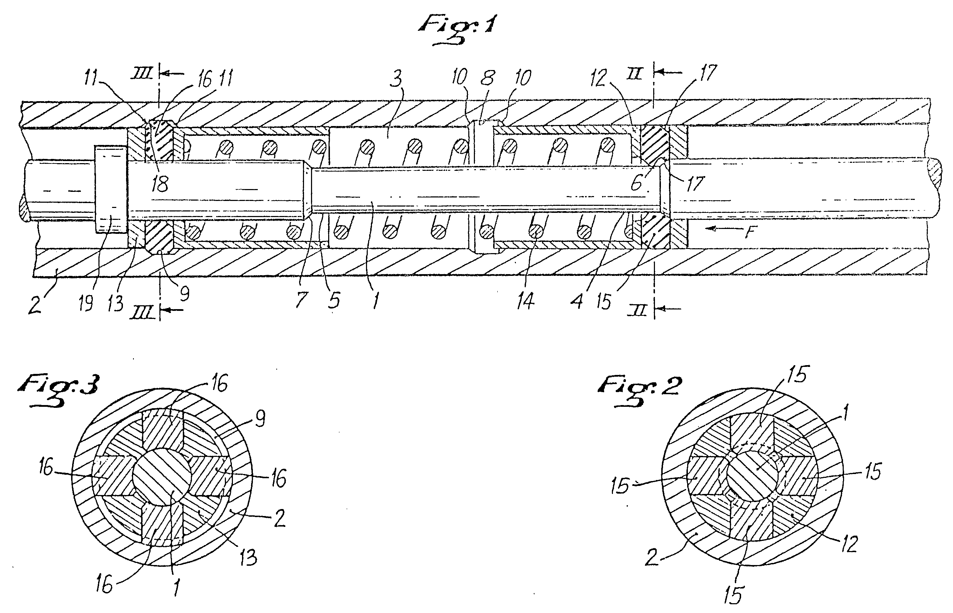

On se réfère tout d'abord aux figures 1 à 3.

Le dispositif représenté comporte une pièce mobile 1 se présentant sous la forme d'une tige allongée susceptible d'être animée d'un mouvement alterné en un sens, puis en un sens opposé, le long de son axe. Ce mouvement peut lui être communiqué par une source d'énergie externe quelconque, par exemple prise de gaz, amplification du mouvement d'une pièce, piston hydraulique, action manuelle. La pièce mobile 1 est entourée d'une pièce fixe cylindrique 2 avec un intervalle intermédiaire libre 3. La pièce mobile 1 présente, écartés d'une certaine distance, deux décrochements 4, 5 à bords inclinés 6 et 7, respectivement.

De même, la pièce fixe 2 présente deux gorges 8, 9 écartées entre elles de la même distance que les décrochements ou gorges 4 et 5 et possédant également des bords inclinés 10, 11. Il en résulte que, lorsque le décrochement 4 arrive au regard de la gorge 8, le décrochement 5 arrive au regard de la gorge 9.

Dans l'intervalle 3 entre les deux pièces fixe et mobile sont logés deux éléments 12, 13, présentant une forme générale cylindrique dont la surface externe glisse contre la surface interne de la pièce fixe 2, lesdits éléments 12, 13 présentant des passages centraux permettant le passage à coulissement de la tige 1 de sorte que lesdits éléments sont également susceptibles de coulisser par rapport à cette tige.

Un ressort récupérateur 14, logé dans l'intervalle 3, appuie par ses deux extrémités sur les deux éléments 12 et 13.

Chaque élément possède, dans sa partie épaisse, quatre passages radiaux dans lesquels sont montés de façon radialement, et donc transversalement, coulissante, quatre verrous 15 et 16, respectivement. Les extrémités radiales desdits verrous présentent des formes incurvées épousant les parois des pièces fixe et mobile. La longueur radiale de chacun des verrous est sensiblement égale à l'épaisseur radiale de l'intervalle 3, augmentée de la profondeur d'une gorge ou d'un décrochement. Les faces opposées axiales des différents verrous 15, 16 présentent, au voisinage des extrémités radiales, des chanfreins 17, 18 inclinés du même angle que les bords 6, 7, 10 et 11 des différents décrochements et gorges.

Le fonctionnement est le suivant.

Partant d'une position stable représentée à la figure 1, la tige 1 subit une poussée lui communiquant une énergie cinétique et provoquant son déplacement dans le sens de la flèche F. Dans cette position initiale, les verrous 15 de l'élément 12 pénètrent dans le décrochement 4 de la tige mobile et les verrous 16 de l'élément 13 pénètrent dans la gorge 9 de la pièce fixe. En outre, le ressort 14 se trouve dans sa position la plus allongée. Le mouvement de la pièce 1 dans le sens de la flèche va provoquer, par l'intermédiaire des verrous 15, l'entraînement de l'élément 12 avec la pièce 1, alors que l'élément 13, en raison des verrous 16 pénétrant dans la gorge 9, reste fixe. Le ressort 14 va donc être progressivement comprimé entre les deux éléments et va emmagasiner l'énergie perdue au fur et à mesure par la pièce 1. Au bout d'un certain temps, les décrochements 4 et 5 vont arriver au regard des gorges 8 et 9 et simultanément l'élément 12 viendra, par son extrémité de gauche, heurter l'extrémité de droite de l'élément 13. A ce moment, le ressort 14 se trouve à l'état de compression maximale.

Le choc qui en résulte va provoquer un ralentissement de l'élément 12 par rapport à la vitesse conservée à ce moment par la pièce 1. Il en résulte que le bord 6 du décrochement 4 de la pièce 1 va, en coopérant avec le chanfrein 17 correspondant des verrous 15, produire un effet de rampe repoussant radialement les verrous 15 vers l'extérieur. Les verrous 15 pénètrent alors dans la gorge 8 et la pièce 1, qui continue sa course, se trouve désolidarisée d'avec l'élément 12 qui se trouve maintenant solidaire de la pièce fixe 2.

Simultanément et de façon inverse, le choc provoque un mouvement de l'élément 13 dans le sens de la flèche et par conséquent, par effet de rampes, le mouvement radial des verrous 16 hors de la gorge 9 vers le décrochement 5. L'élément 13 se trouve alors solidaire de la pièce mobile 1 et le ressort 14, qui était comprimé au maximum, va donc pouvoir se détendre, en prenant appui sur l'élément fixe 12, pour repousser l'élément mobile 13, et avec lui, la tige mobile 1 jusqu'à ce que celle-ci arrive à sa deuxième position stable. Pendant cette deuxième partie de mouvement, le ressort restitue donc à la pièce 1 l'énergie qu'il avait acquise en se comprimant.

On peut, en outre, avantageusement prévoir un épaulement 19 porté par la tige 1 et occupant la position représentée sur le dessin, c'est-à-dire venant au contact de l'élément de gauche 13 lorsque la tige occupe sa position stable de droite. Cet épaulement empêche, lors du démontage d'un ensemble dans lequel le dispositif de récupération est incorporé, une séparation des divers éléments du dispositif de récupération. De façon avantageuse, on peut prévoir sur la tige 1 un deuxième épaulement amovible situé, à droite de l'élément 12, à une distance telle qu'il vienne en contact avec ledit élément lorsque celui-ci se trouve solidaire de la pièce fixe 2.

En se référant aux figures 4 et 5, on voit un montage possible du dispositif selon l'invention. Dans ce montage, le dispositif montré aux figures 1 à 3 est représenté de façon schématique en 20, une partie de la tige 1 émergeant du dispositif et étant reliée à une pièce mobile 21 d'un mécanisme quelconque, par exemple un tiroir d'arme à feu soumis à l'action de gaz. Les moyens communiquant dans un sens, puis dans l'autre, l'énergie cinétique à la pièce 21 et donc à la tige 1, ont été représentés schématiquement en 22.

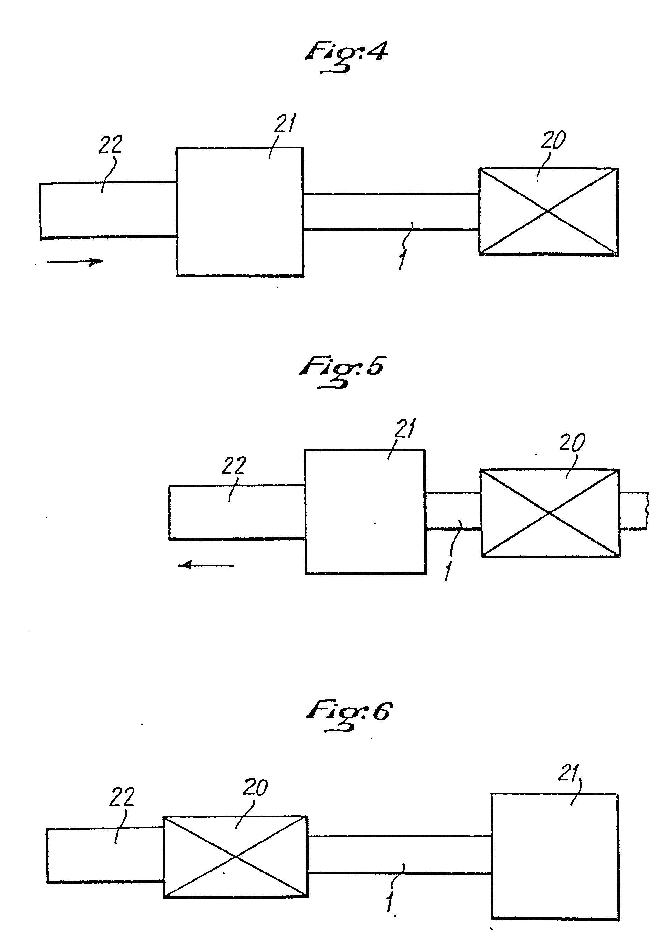

En se référant à la figure 6, on voit un autre montage dans lequel le dispositif de récupération 20, selon l'invention, est inséré entre la pièce mobile 21 et l'organe fournissant l'énergie 22.

Bien que l'invention ait été décrite à propos d'une forme de réalisation particulière, il est bien entendu qu'elle n'y est nullement limitée et qu'on peut lui apporter diverses modifications sans s'éloigner ni de son cadre, ni de son esprit.

## Revendications

1. Dispositif de récupération élastique bistable comprenant une pièce animée d'un mouvement alterné en deux sens opposés, et des moyens élastiques susceptibles d'emmagasiner une énergie cinétique communiquée à la pièce pendant une première partie du parcours dans un sens et de restituer cette énergie à la pièce pendant la deuxième partie du parcours dans ce sens, caractérisé par le fait qu'il comporte, montés de façon coulissante entre la pièce mobile (1) et une pièce fixe (2), deux éléments (12, 13) dont le rapprochement mutuel entraîne l'emmagasinage de l'énergie et l'éloignement mutuel entraîne la restitution de l'énergie, des moyens étant prévus pour maintenir, pendant la première partie du parcours dans un sens, le premier des éléments solidaire de la pièce mobile (1) et le deuxième élément solidaire de la pièce fixe (2) et pour maintenir, au contraire, pendant une deuxième partie du parcours dans le même sens, le premier des éléments solidaire de la pièce fixe (2) et le deuxième élément solidaire de la pièce mobile (1).

2. Dispositif selon la revendication 1, caractérisé par le fait que la pièce mobile (1) présente la forme d'une tige axiale susceptible de se déplacer à l'intérieur d'un bâti concentrique figurant la pièce fixe (2) avec un espace intermédiaire entre ladite tige et ledit bâti, lesdits éléments (12, 13) étant montés coulissant dans ledit espace.

3. Dispositif selon l'une quelconque des revendications 1 et 2, caractérisé par le fait que les moyens permettant de solidariser les éléments (12, 13) avec les pièces mobile et fixe et de les en désolidariser, comportent des verrous (15, 16) susceptibles de se déplacer, transversalement par rapport à la direction du mouvement, à l'intérieur de chacun desdits éléments (12, 13), la pièce mobile (1) présentant deux décrochements (4, 5) espacés l'un de l'autre et la pièce fixe (2) également deux gorges (8, 9) espacées l'une de l'autre de la même distance, la dimension transversale de chaque verrou étant supérieure à l'écart existant entre la pièce mobile et la pièce fixe, lesdits éléments étant disposés de façon telle que, lorsque les verrous de l'un des éléments sont disposés dans l'une des gorges (8, 9) de la pièce fixe (2), les verrous de l'autre élément sont disposés dans un des décrochements (4, 5) de la pièce mobile (1), des moyens étant prévus pour simultanément déplacer les verrous entre les gorges ou décrochements des pièces fixe et mobile, lorsque les gorges et décrochements correspondants desdites pièces se trouvent en concordance.

4. Dispositif selon la revendication 3, caractérisé par le fait que les moyens permettant d'assurer le mouvement transversal desdits verrous comprennent des bords de gorges ou de décrochements inclinés formant rampe et coopérant avec des bords inclinés de façon correspondante des verrous, la distance axiale entre lesdits deux éléments (12, 13) étant réglée de façon telle que, lorsque les gorges et décrochements des pièces fixe et mobile arrivent en concordance, l'élément entraîné avec la pièce mobile (1) vient heurter l'élément solidaire de la pièce fixe (2), communiquant aux deux éléments un choc entraînant, pour l'élément qui se déplace, et ses verrous, un ralentissement par rapport à la pièce mobile (1) et par conséquent, complémentairement à l'action des moyens élastiques, une action de rampe de la pièce mobile (1) contre les verrous de l'élément, provoquant leur déplacement radial vers la gorge correspondante de la pièce fixe (2), et simultanément une accélération temporaire de l'autre élément, provoquant, complémentairement à l'action des moyens élastiques par glissement des verrous (15, 16) de cet autre élément entre la pièce fixe (2) et la partie de la pièce mobile (1) comprise entre les deux décrochements (4, 5) de ladite pièce mobile (1), le mouvement desdits verrous vers le décrochement correspondant de la partie mobile (1).

5. Dispositif selon l'une quelconque des revendications 1 à 4, caractérisé par le fait qu'un ressort récupérateur (14) est interposé entre lesdits éléments (12, 13) de façon à se comprimer et emmagasiner l'énergie lorsque lesdits deux éléments se rapprochent l'un de l'autre et au contraire à se détendre et à restituer l'énergie lorsque lesdits deux éléments s'éloignent l'un de l'autre.

6. Dispositif selon l'une quelconque des revendications 3 à 6, caractérisé par le fait que lesdits éléments (12, 13) présentent une forme généralement cylindrique susceptible de coulisser par rapport auxdites pièces fixe et mobile, lesdits verrous (15, 16) étant montés dans des ouvertures transversales présentées par lesdits éléments.

7. Dispositif selon la revendication 6, caractérisé par le fait que lesdits éléments (12, 13) présentent une surface cylindrique périphérique susceptible de coulisser dans la pièce fixe (2) et un passage central susceptible de coulisser sur la pièce mobile (1) en forme de tige, les extrémités transversales desdits verrous (15, 16) étant incurvées de façon à épouser les parois correspondantes desdites pièces fixe et mobile.

**Claims**

1. Bistable flexible recovery device comprising a part to which an alternating movement is imparted in two opposite directions, and flexible means of storing a kinetic energy communicated to the part during the first section of the route in one direction and restoring this energy to the part during the second part of the route in this direction, characterized by the fact that it contains, mounted sliding between the moving part (1) and the fixed part (2), two components (12, 13) whose mutual closing up entails the storing of energy and whose mutual moving apart entails the restoring of energy, means being provided to maintain, during the first part of the route in one direction, the first of the components integral with the moving part (1) and the second component integral with the fixed part (2) and on the contrary, during a second part of the route in the same direction, to maintain the first of the components integral with the fixed part (2) and the second component integral with the moving part (1).

2. Device according to claim 1, characterized by the fact that the moving part (1) is in the form of an axial rod capable of moving inside a concentric frame containing the fixed part (2) with an intermediate space between the said rod and the said frame, the said components (12, 13) being mounted sliding in the said space.

3. Device according to any one of the claims 1 and 2, characterized by the fact that the means by which the components (12, 13) can be secured to the fixed parts and then separated from them, include locks (15, 16) capable of moving, transversally in relation to the direction of the movement, inside each of the said components (12, 13), the moving part (1) containing two set-backs (4, 5) spaced on either side of the fixed part (2), also two grooves (8, 9) spaced on either side at the same distance, the transverse dimension of each lock being greater than the difference between the moving parts and the fixed part, the said components being arranged in such a way that, when the locks of one of the components are inserted in one of the grooves (8, 9) of the fixed part (2), the locks of the other component are inserted in one of the set-backs (4, 5) of the moving part (1), means being provided to move the locks simultaneously between the grooves or set-backs of the fixed and moving parts, when the corresponding grooves and set-backs of the said parts concord with each other.

4. Device according to claim 3, characterized by the fact that the means of ensuring the transverse movement of the said lock include inclined edges of grooves or set-backs forming ramp and cooperating with the edges of the locks inclined correspondingly, the axial distance between the said two components (12, 13) being adjusted so that, when the grooves and set-backs of the fixed and moving parts concord, the component driven with the moving part (1) strikes the component integral with the fixed part (2), communicating to the two components an impact entailing, for the component moving, and its locks, a slow-down as compared to the moving part (1) and consequently, complementary to the action of the flexible means, a ramp action of the moving part (1) against the locks of the component, causing their radial movement towards the corresponding groove of the fixed part (2), and simultaneously a temporary acceleration of the other components, causing, complementarily to the action of the flexible means by slipping of the locks (15, 16) of this other component against the fixed part (2) and the section of the moving part (1) between the two set-backs (4, 5) of the said moving part (1), the movement of the said locks towards the corresponding set-back of the moving part (1).

5. Device according to any one of claims 1 to 4, characterized by the fact that a recovery spring (14) is interposed between the said components (12, 13) so as to compress and store the energy when the said two components get closer to each other and on the contrary to expand and restore the energy when the said two components separate from each other.

6. Device according to any one of claims 3 to 5, characterized by the fact that the said components (12, 13) have a generally cylindrical form capable of sliding in relation to the said fixed and moving parts, the said locks (15, 16) being installed in transverse openings in the said components.

7. Device according to claim 6, characterized by the fact that the said components (12, 13) have a cylindrical peripheral surface capable of sliding in the fixed part (2) and a central passage capable of sliding on the moving part (1) in rod form, the transverse ends of the said lock (15, 16) being incurved so as to match the corresponding walls of the said fixed and moving parts.

**Ansprüche**

1. Elastische bistabile Vorrichtung zur Rückgewinnung, die ein Teil in einer abwechselnd in zwei entgegengesetzten Richtungen genenden Bewegung aufweist, und elastische Mittel, mit denen eine kinetische Energie gespeichert werden kann, die dem Teil während eines ersten Streckenteils in einer Richtung mitgeteilt und diese Energie dem Teil während des zweiten Teils der Strecke in diese Richtung wieder zurückgegeben wird, dadurch gekennzeichnet, dass sie zwei Elemente (12, 13) aufweist, die gleitend zwischen dem mobilen Teil (1) und einem festen Teil (2) montiert sind, deren gegenseitige Annäherung die Speicherung der Energie mit sich führt und deren jeweilige Entfernung die Rückgabe der Energie mit sich führt wobei die Mittel vorgesehen sind, während des ersten Teils der Strecke in einer Richtung das erste der Elemente formschlüssig mit dem beweglichen Teil (1) zu halten und das zweite Element formschlüssig mit dem festen Teil (2), und um dem entgegengesetzt während des zweiten Teils der Strecke in der gleichen Richtung das erste der Elemente formschlüssig mit dem festen Teil (2) und das zweite Element formschlüssig mit dem beweglichen Teil (1) zu halten.

2. Vorrichtung gemäss Anspruch 1, dadurch gekennzeichnet, dass das bewegliche Teil (1) die Form einer Achsialstange aufweist, die sich im Innern eines konzentrischen Rahmens bewegt, in dem sich das feste Teil (2) befindet mit einem Zwischenraum zwischen der besagten Stange und dem besagten Rahmen, wobei die besagten Elemente (12, 13) gleitend in besagtem Raum montiert sind.

3. Vorrichtung gemäss eines beliebigen der Ansprüche 1 und 2, dadurch gekennzeichnet, dass die Mittel, mit denen die Elemente (12, 13) mit dem beweglichen und dem festen Teil formschlüssig gemacht werden und davon getrennt werden können, Riegel (15, 16) umfassen, die sich quer zur Bewegungsrichtung im Innern jedes der besagten Elemente (12, 13) verschieben können, wobei das bewegliche Teil (1) zwei Absätze (4, 5) aufweist, die voneinander getrennt liegen und das feste Teil (2) ebenfalls zwei Kehlen (8, 9) die um den gleichen Abstand voneinander entfernt sind, wobei die Querdimension jedes Riegels grösser als der Abstand zwischen dem beweglichen Teil und dem festen Teil ist, wobei die besagten Elemente so angeordnet sind, dass, wenn die Riegel eines der Elemente in einer der Kehlen (8, 9) des festen Teils (2) angeordnet sind, die Riegel des anderen Elements in einem der Absätze (4, 5) des beweglichen Teils (1) angeordnet sind, wobei die Elemente so vorgesehen sind, dass sie die Riegel zwischen den Kehlen oder Absätzen des festen und des beweglichen Teils gleichzeitig bewegen, wenn die entsprechenden Kehlen und Absätze der besagten Teile übereinstimmen.

4. Vorrichtung gemäss Anspruch 3, dadurch gekennzeichnet, dass die Mittel, die die Querbewegung der besagten Riegel ermöglichen, geneigte Kehlen- oder Absatzränder aufweisen, die eine Rampe bilden und mit den entsprechenden geneigten Rändern der Riegel zusammenarbeiten, wobei der Achsialabstand zwischen den besagten zwei Elementen (12, 13) so geregelt ist, dass, wenn die Kehlen und Absätze des festen und des beweglichen Teils in Übereinstimmung gelangen, das mit dem beweglichen Teil (1) mitgeführte Element auf das mit dem festen Teil (2) formschlüssig verbundene Element trifft, den beiden Elementen einen Stoss mitteilt, der für das sich bewegende Element und seine Riegel eine Verlangsamung im Verhältnis zum beweglichen Teil (1) mit sich führt und folglich und zusätzlich zur Aktion der elastischen Mittel, eine Rampenaktion des beweglichen Teils (1) gegen die Riegel des Elements, was ihre Radialbewegung zur entsprechenden Kehle des festen Teils (2) hervorruft und gleichzeitig eine vorübergehende Beschleunigung des anderen Teils, was zusätzlich zur Aktion der elastischen Mittel, durch Gleiten der Riegel (15, 16) dieses anderen Elements zwischen dem festen Teil (2) und dem Teil des beweglichen Teils (1), der sich zwischen den beiden Absätzen (4, 5) des besagten beweglichen Teils (1) befindet, die Bewegung der besagten Riegel zum entsprechenden Absatz des beweglichen Teils (1) hervorruft.

5. Vorrichtung gemäss eines beliebigen der Ansprüche 1 bis 4, dadurch gekennzeichnet, dass sich eine Rückholfeder (14) zwischen den besagten Elementen (12, 13) befindet, die sich zusammendrückt und die Energie speichert, wenn die besagten beiden Elemente sich gegenseitig annähern und die dem entgegengesetzt sich entspannt und die Energie wieder zurückgibt, wenn sich die besagten zwei Elemente voneinander entfernen.

6. Vorrichtung gemäss eines beliebigen der Ansprüche 3 bis 5, dadurch gekennzeichnet, dass die besagten Elemente (12, 13) im allgemeinen von zylindrischer Form sind, die im Vergleich zu den besagten festen und beweglichen Teilen gleiten, wobei die besagten Riegel (15, 16) in den Queröffnungen der besagten Elemente montiert sind.

7. Vorrichtung gemäss Anspruch 6, dadurch gekennzeichnet, dass die besagten Elemente (12, 13) eine zylindrische peripherische Oberfläche aufweisen, die im festen Teil (2) gleiten kann, und einen mittigen Durchgang, der auf dem beweglichen Teil (1) in Form einer Stange gleiten kann, wobei die Querenden der besagten Riegel (15, 16) so gekrümmt sind, dass sie sich den entsprechenden Wänden der besagten festen und beweglichen Teile anpassen.

*Fig:1*

*Fig:3*

*Fig:2*

0 031 273

*Fig:4*

*Fig:5*

*Fig:6*